# EUROPEAN PATENT SPECIFICATION

(11) **EP 0 886 979 B1**
(45) Date of publication and mention of the grant of the patent: **26.05.2004**
(21) Application number: 97914464.9
(22) Date of filing: 26.03.1997
(51) Int. Cl.: H04Q 7/22, H04M 3/44

(54) **SHORT CODE DIALLING**
KURZWAHL
INDICATIFS DE NUMEROTATION ABREGEE

(30) Priority: 29.03.1996 GB 9606748
(43) Date of publication of application: 30.12.1998
(73) Proprietor: BRITISH TELECOMMUNICATIONS public limited company, London EC1A 7AJ (GB)
(72) Inventor: FENTON, Christopher, John, Ipswich Suffolk IP4 5RR (GB); CLAPTON, Alan, James, Capel St. Mary Ipswich Suffolk IP9 2UZ (GB)
(74) Representative: Lidbetter, Timothy Guy Edwin
(86) International application number: PCT/GB1997/000865
(87) International publication number: WO 1997/037502

(56) References cited:
- EP-A- 0 491 493
- WO-A-95/06381
- WO-A-95/20299
- US-A- 5 418 844
- M. MOULY ET AL: 'The GSM System for Mobile Communications', 1993, MOULY ,PAUTET, LASSAY-LES CHATEAUX (FR) see page 67, paragraph 1.3.1.6. - page 71, paragraph 1.3.1.7. see page 142, paragraph 3.2.2.3. - page 148, paragraph 3.2.2.5.

## Description

This invention relates to a short code subscription apparatus for a telecommunications network, and to a method of making calls through the network using short codes.

In conventional telecommunication networks, calls are usually connected on the basis of a diallable number which forms part of a defined numbering plan. Conventional telephone numbers typically comprise a large number of digits, typically nine or more, although in certain circumstances they may comprise as few as five or six digits for local calls on the fixed PSTN (public switched telephone network). Alternatively, short codes of for example two or three digits can be used in private networks. Such systems are described for example in International Patent Specifications WO95/06381 and W095/20299. The short codes can be used with a look-up memory in order to access a full telephone number on the basis of a short code. The term "short code" is used in this specification to mean a code which is shorter than the normal telephone number of the line accessed by the code. Because such codes are short they are easy to find fortuitously, making access control difficult.

It is possible to configure a service that allows a mobile user to access a data converting device, commonly known as a Packet Assembler/Diassembler (PAD), so that communications with database hosts and other users on a Packet Switched Public Data Network (PSPDN) can be made. Existing systems within the GSM (Global System for Mobile communication) standard can be used to identify short codes of the kind described above to allow access to a PAD, but there is no management of authorisation of access to a specific PAD by the GSM network so, in order to provide security, the user of the mobile station needs to enter a specific password and comply with other security measures in order to gain access into the private network after the initial connection has been established to the private network by the use of the short code, thereby preventing accidental or deliberate use of the short code to gain unauthorised access. These additional security measures need to be performed after the call has been connected, and so if the user is not permitted access, network resources have been wastefully used up during the failed connection process. Furthermore, the use of passwords is inconvenient for the mobile user, and defeats the advantages of short code access.

Services such as call screening can be used to provide a measure of security for the dialled station, by determining the number of the dialling station. This service is provided for the security of the dialled station, so the recipient of the call may be required to pay for this benefit. Also, since the screening takes place at the dialled station, network resources are used to make the initial connection, which is wasteful if the call is to be rejected.

The present invention provides an alternative approach. In accordance with the invention, there is provided a short code dialling apparatus comprising:
telecommunication network means for selectively providing communication links between a plurality of dialling stations and a plurality of dialled stations in dependence upon short codes produced by the dialling stations, at least one dialled station being a data conversion device selectable by a predetermined short code and having means for performing subscriber-specific data-conversion operations in response to the short code produced by the dialling station and/or the identity of the dialling station;
and characterised by checking means for comparing the identity of a short code produced by a dialling station with the identity of the dialling station and, if the short code corresponds to a short code permitted to be used for calls made from said station, allowing the communication link to be established to the dialled station.

Thus, in accordance with the invention, the short code generated at the dialling station is checked before the communication link between the dialling station and the dialled station is established, avoiding wasteful use of network resources in the event that the call is not permitted to be made from the dialling station, for example because the user of the dialling station is not an authorised subscriber of the data conversion device. Furthermore, it is possible for a network operator to configure the data conversion device (PAD) such that for a given short code a single PAD (or group of PADs) will have an association. This allows an operator to offer a subscriber a fixed relationship between a short code and a PAD. The PAD can then be configured with subscriber-specific information so as to make onward communications easier and more professional.

The invention has particular application to mobile networks, especially cellular networks. In a conventional mobile network, the identity of the user of a mobile station, such as a mobile telephone handset, is determined by comparing a unique identification code held in the mobile station with a stored value held in the network and, in the case of GSM, additional authentication processes are performed to provide additional security. In accordance with the invention, this system may be adapted to permit the network to determine whether particular short codes are permitted to be dialled from the mobile station, and how to configure the data conversion device for the individual user.

To this end, the mobile network may include a service control means that stores data concerning the identity of mobile stations for use with the network and corresponding groups of short codes permitted to be used from the respective mobile stations. The mobile network may include message switching means operative in response to such a short code, and to calling data received from a mobile station concerning the identity thereof, to refer the calling data to the service control means for determining whether the short code is permitted to be used by the mobile station, and routing the call according to the short code if the short code is permitted for use, but otherwise failing a call.

The short code may be used to access a network such as a private packet switch network. Since the checking means itself provides a check as to whether the short code is permitted for use from the mobile station, there may be no need to provide further password security for accessing the packet switch network, because the identification of the mobile subscriber is itself sufficient to determine whether it is permitted to make calls to the network from the mobile station.

The apparatus can also be used when mobile stations "roam" from one network to another; that is, a mobile station operates in co-operation with a network other than its "home" network. When the roaming mobile station is registered with the network, the short codes permitted for use by the mobile station can be loaded into a visitor register means that keeps a record of data concerning the roaming mobile station and the short codes permitted to be used by the roaming station.

The invention also includes a method of selectively establishing telecommunication links between a plurality of dialling stations and a plurality of dialled stations in dependence upon short codes produced by the dialling stations, at least one dialled station being selectable by a predetermined short code, the method comprising the steps of:
on establishment of a communication link between a dialled station and the dialling station, performing subscriber-specific data-conversion operations at the dialled station, the operations being dependent on the short code produced by the dialling station and on the identity of the dialling station;
characterised in that a short code produced by a dialling station is compared with the identity of the dialling station; and a communication link is established if the short code corresponds to a short code permitted to be used for calls made from said dialling station.

In order that the invention may be more fully understood an embodiment thereof will now be described by way of example with reference to the accompanying drawings in which:
Figure 1 is a schematic block diagram of a mobile network that incorporates short code subscription apparatus in accordance with the invention; and
Figure 2 illustrates two mobile networks for explaining how data concerning the short codes is processed in the event of the mobile station roaming.

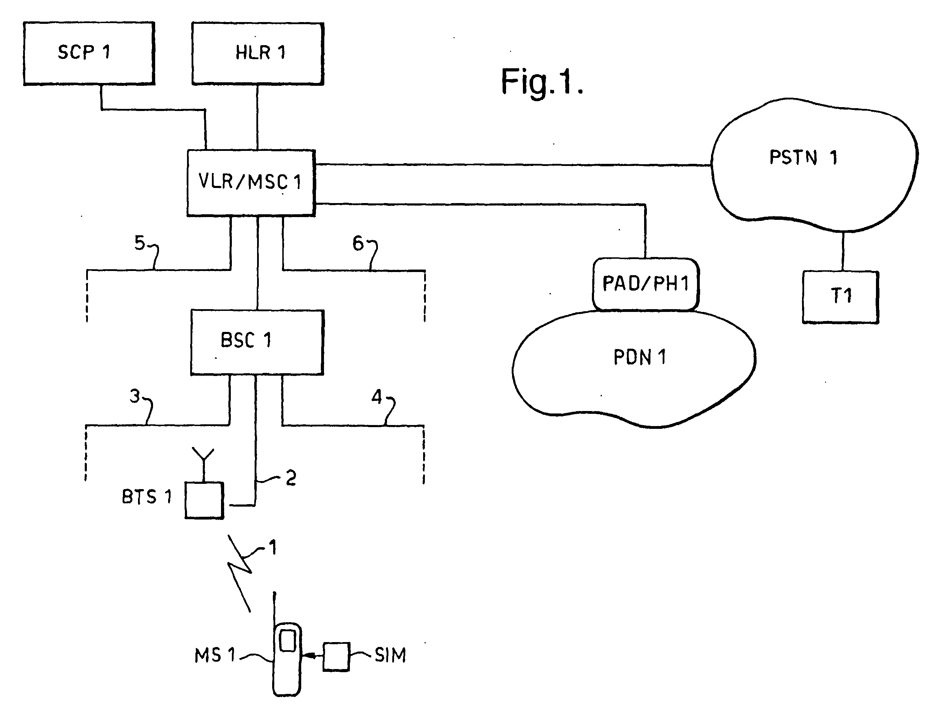

Referring to Figure 1, a mobile cellular telephone network operating in accordance with the GSM standard is shown schematically. A mobile station MS1, in a conventional manner, includes a subscriber identification module SIM, which consists of a "smart card" inserted into the mobile station. A radio communication link 1 is established between the mobile station and a base transceiver site BTS1. This base transceiver site is one of a number of base transceiver sites BTS spaced apart at locations within an area of coverage of the network which operate at different frequencies to provide individual cells in a manner well known *per se.* Groups of base transceiver sites are connected to a base station controller BSC1. The connection for the base transceiver site BTS1 is referenced 2 in Figure 1 and references 3 and 4 illustrate schematically the connections of other base transceiver sites to the base site controller BSC1. The base site controller BSC1 is connected to a mobile switching centre MSC1. Other base site controllers (not shown) in the network are also connected to the mobile switching centre MSC1, as shown schematically by signal paths 5, 6. In Figure 1, the mobile switching centre MSC1 is connected to a conventional land-based public switched telephone network PSTN1 and includes a gateway for incoming calls from the PSTN. Also, the mobile switching centre MSC1 is connected to a private packet switched digital network PDN1. Access to the private network PDN1 is provided through a packet assembler/disassembler or a packet handler PAD/PH1. For example, the private network PDN1 may comprise a private company network providing data communication between different factories or offices within the company. A conventional telephone handset T1 is shown connected to PSTN1.

In use, calls made from the mobile station MS1 are routed through the base site controller BSC1 to the mobile switching centre MSC1 where they are routed either to other mobile stations within the GSM network or to dialled stations in other networks e.g. the telephone T1 connected to PSTN1. Calls can be made to the mobile station MS1 in an inverse manner. For further details of the configuration of the GSM mobile network, reference is directed to the various GSM standards papers issued by the European Telecommunications Standards Institute (ETSI).

The mobile GSM network also includes a home location register HLR1. Furthermore, a visitor location register VLR1 is coupled to the mobile switching centre MSC1. The home location register HLR1 contains information concerning a unique identification number known as an International Mobile Subscriber Identity (IMSI) for each SIM registered as having its home location with the network, together with a GSM secret key, which is a security code unique to the user. In the GSM protocol, when a telephone call is made from the mobile station MS1, data concerning the IMSI held on the SIM card is transmitted to the mobile switching centre MSC1, together with an encrypted version of the secret key and the dialled digits designating the station to be dialled e.g. the telephone T1. The the mobile switching centre MSC1, on receipt of such data, validates the user according to standard GSM procedures, which involve checking the encrypted version of the secret key with a corresponding version produced locally with reference data from the home location register HLR1.

Typically, when dialling a dialled station such as telephone T1, the dialled number is a relatively long dialled code e.g. nine digits or more. However, the GSM standard also contemplates the use of short codes for accessing packet switched networks such as the private network PDN1. The mobile switching centre MSC1 is configured to recognise a short code such as a two digit code to provide the mobile user with access to the network. However, conventionally, there has been no security associated directly with the two digit code. Instead, security has been provided by the use of a password regime. The user is obliged to enter a password in the form of a multi-digit code after connection to the PAD/PH1 has been established.

The present invention provides an alternative approach. In accordance with the invention, the home location register HLR1 stores a list of the short codes in association with each user's IMSI so as to define the short codes which each individual user is permitted to use.

When a short code is dialled on the mobile station MS1, calling data comprising the short code together with caller identification data derived from the SIM card are transmitted over the radio link 1 to the base transceiver site BTS1 and thence to the mobile switching centre MSC1 through the base site controller BSC1. Prior to routing the call, the mobile switching centre MSC1 refers the calling data to the visitor location register VLR1 where the identity of the dialling station MS1 is authenticated by use of the IMSI and the secret key. The short code in the calling data is then compared with the permitted list of short codes to determine whether the user is permitted to make the call. If the caller is permitted to make the call, the visitor location register VLR1 signals to the mobile switching centre MSC1 that the call can be routed to a destination corresponding to the short code; in this instance PAD/PH1. Otherwise, the mobile switching centre MSC1 fails the call and an appropriate failure message is transmitted back through the base site controller BSC1 and the base transceiver site BTS1 to the mobile station MS1 to inform the user that the call has not been connected.

As is well known in the art, the security checking procedures used in the GSM standard, which make use of the IMSI held on the SIM card and the associated secret key process, provide a very high degree of security. Thus, access to PAD/PH1 can only be achieved through users which have been preassigned the short code which provides access. Thus, only permitted users may access the private network PDN1. Accordingly, the security checking procedures of the GSM standard have been adapted, according to the invention, to provide a secure access control to the private network and consequently, additional password measures are not needed to provide security.

It is possible for a network operator to configure the PAD such that for a given short code a single PAD (or group of PADs) will have an association. The allows an operator to offer a subscriber (e.g. a corporate) a fixed relationship between a short code and a PAD. The PAD can then be configured with subscriber-specific information so as to make onward communications easier and more professional. Such configurations are; formatted welcome page in corporate logo; list of short-cut preselected options to route caller to corporate hosts; or simply additional Closed User Group (CUG) information and autorouting the caller to the host (i.e. without having to navigate intermediate levels), once the user, and therefore his access privileges have been established. By providing the need to subscribe to the short code, the security of the PAD access can be assured.

This enhances the service to the subscriber by adding value to the call setup procedure through a personalised welcome page, access to user-specific data, etc, and by simplifying the charging since the user can receive the PSPDN (Packetc Switched Public Data Network) charges through the GSM network account.

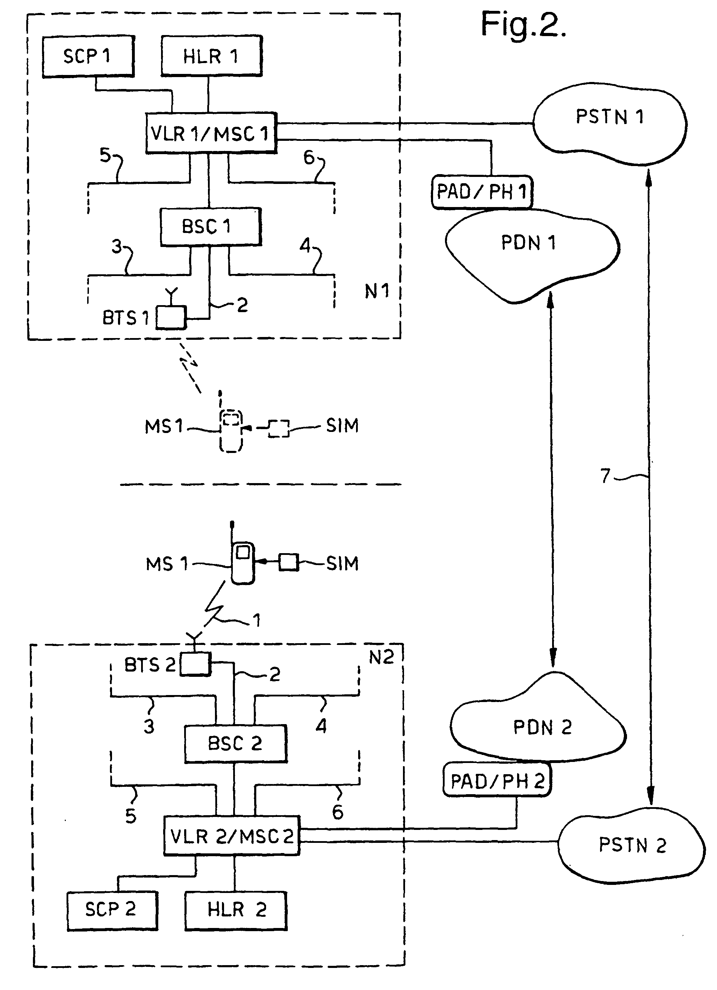

The network will also provide similar facilities for roaming mobile stations, as will now be described with reference to Figure 2. In Figure 2, first and second mobile GSM networks N1 and N2 are shown. The network N1 corresponds to the configuration shown in Figure 1 and the network N2 is substantially identical to N1, with its component parts being referenced with a suffix 2. Typically, the first network N1 may be in one country and the network N2 in a different country. The networks N1 and N2 are connected to respective local national public switched telephone networks PSTN 1, 2. The national networks PSTN1, 2 are connected by international signal paths 7 in a manner well known *per se.* The private digital network PDN1 is connected to the private network PDN2 and may in fact form a single network for example for an international company with offices and factories in the two countries, the parts being linked by private telecommunications links. According to the GSM standard, the private networks PDN1 and PDN2 can both be accessed by the same short code.

When the mobile station MS1 roams from its home network N1 to the network N2, the mobile station needs to be registered with the network N2. In accordance with the GSM standard, a mobile station transmits its unique identification number derived from the SIM card to the network N2. The identification number is transmitted through the Base Transceiver Site BTS2 and the Base Site Controller BSC2 to the mobile switching centre MSC2, where it is loaded into a visitor location register VLR2. The visitor location register VLR2 then instructs the network to establish a connectionless signalling path through PSTN2, PSTN1, and the international signalling system 7 to obtain information concerning the user from the home location register for the user namely HLR1. The relevant data is transmitted back to the network N2 and loaded into the visitor location register VLR2. Furthermore, in accordance with the invention, the relevant data includes the group of short codes permitted to be used by the user of the mobile station MS1. Thus, when the user of the mobile station MS1 makes a call through network N2 using a short code, the mobile switching centre MSC2, prior to routing the call, refers the calling data received from the mobile station to the visitor location register VLR2 where the identification data and the short code are compared with corresponding data derived from HLR2. If it is determined that the user is permitted to dial the short code, the call is appropriately routed by the mobile switching centre MSC2 but otherwise, the call is failed and a message is transmitted to the mobile station in the manner previously described with reference to Figure 1. Thus, the same short code that was used to access the private network PDN1 in relation to network N1 can also be used when the mobile station has roamed to network N2 in order to access the private digital network through PAD/PH2, thus permitting a local connection to be made and minimising billing costs to the user.

Many modifications and variations of the described apparatus are possible. For example, in order to provide an enhanced service provision, the networks N 1 and N2 may each include a service control point SCP1, SCP2, in which case the short code checking may be carried out at a service control point SCP1, SCP2 rather than using the data in the visitor location registers VLR1, VLR2.

Also, instead of each private network having a common short code for all users, each user may have his own set of short codes, which are individually interpreted by the network (HLR/VLR/MSC) to provide access to predetermined dialled stations, such as a private network, or dialled stations accessible by longer dialled codes in which case the Mobile Switching Centre (MSC) appropriately produces the longer dialled code.

The invention is applicable to other mobile networks and could for example be used with networks which are not cellular, such as a DECT network. Also, for cellular systems, it is not essential to use the GSM standard. For example, DAMPS or other known standards both digital and analogue could be used.

Furthermore, the invention is not restricted to mobile systems and can be used with conventional land-based switched telephone networks. For example, it is possible to offer a similar solution when access is required to a Intelligent Network (IN) Specialised Resource Function (SRF) which could provide the PAD functionality.

## Claims

1. A short code dialling apparatus comprising:
telecommunication network means (N2) for selectively providing communication links between a plurality of dialling stations (MS1) and a plurality of dialled stations (T1) in dependence upon short codes produced by the dialling stations (MS1) , at least one dialled station being a data conversion device (PAD/PH1) selectable by a predetermined short code and having means for performing subscriber-specific data-conversion operations in response to the short code produced by the dialling station and/or the identity of the dialling station; and
**characterised by** checking means (VLR2) for comparing the identity of a short code produced by a dialling station (MS1) with the identity of the dialling station and, if the short code corresponds to a short code permitted to be used for calls made from said station, allowing the communication link to be established to the dialled station (PAD/PH1).

2. Apparatus according to claim 1 wherein the checking means (SCP2) comprises means for providing a group of short dialling codes permitted to be used by the dialling station (MS1), and means for comparing the short codes dialled from said station with the short codes in the group.

3. Apparatus according to claim 2 including means (VLR2) for associating data corresponding to the identity of the dialling station (MS1) with the group, and means (SCP2) for comparing the identity of the dialling station with said data, to determine the permissible short codes that can be used by the dialling station.

4. Apparatus according to claim 2 or 3 including means defining a plurality of groups of short codes permitted to be used for calls made from a plurality of individual dialling stations.

5. Apparatus according to any preceding claim including call routing means (MSC2) for selectively routing calls corresponding to the short codes dialled by the dialling station (MS1) to the dialled stations, the checking means (MSC2, VLR2) being operative to disable routing of a call in the event that an associated short code is not permitted to be used by the dialling station (MS1).

6. Apparatus according to any preceding claim wherein the network means (7) includes a first network (N2) for communicating with the dialling station, and a second network (N1) accessible from the first network by a predetermined one of said short codes.

7. Apparatus according to claim 6 wherein the first network (N2) includes a radio link (1) for use with a mobile station (MS1) as the dialling station.

8. Apparatus according to claim 7, including the mobile station (MS1) for use as the dialling station.

9. Apparatus according to claim 8 wherein the first network (N2) is a cellular radio network and the mobile station (MS1) includes a memory with a unique stored identification code to provide said identity.

10. Apparatus according to claim 9 wherein the unique code is stored in a SIM card (SIM).

11. Apparatus according to any one of claims 7 to 10 wherein the first network (N2) includes service control means (SCP2) that stores data concerning the identity of mobile stations for use with the network (N2) and corresponding groups of short codes permitted to be used from the respective mobile stations.

12. Apparatus according to claim 11 including message switching means (MSC2) operative, in response to calling data received from a mobile station (MS1) concerning the identity thereof and a short code, to refer the calling data to the service control means (SCP2) for determining whether the short code is permitted to be used by the mobile station, and routing the call according to the short code if the short code is permitted for use, but otherwise failing the call.

13. Apparatus according to claim 12 including means (MSC2) for signalling to the mobile station that a call has failed when the short code in said calling data is determined to be impermissible for use by the mobile station.

14. Apparatus according to claim 11, 12 or 13 wherein the first network (N2) includes home register means (HLR2) for keeping data concerning the identity of the mobile stations registered for use with the network and the short codes permitted for use by the mobile stations respectively.

15. Apparatus according to claim 14, wherein the home register means (HLR2) includes a register of dialled station numbers to be associated with the permitted short codes.

16. Apparatus according to claim 14 or 15 including visitor register means (VLR2) for keeping data concerning a mobile station that is roaming from another network (N1) and registered for use with the first network (N2), the visitor register means (VLR2) including data concerning the short codes permitted to be used by the roaming mobile station (MS1).

17. Apparatus according to claim 16 wherein the first network (N2) is operative to derive data concerning the permissible short codes for the roaming mobile station (MS1) from the network (N1) from which it has roamed, in response to the roaming station registering with the first network (N2).

18. Apparatus according to any one of claims 6 to 17 wherein the second network comprises a packet switched network (PSTN).

19. Apparatus according to claim 18 including packet assembling and disassembling means (PAD/PH2) responsive to a predetermined one of the short codes for providing access to the second network (N1, PSTN1) from the first network (N2).

20. Apparatus according to any one of claims 6 to 19 wherein the second network (N2) is a private network.

21. Apparatus according to any preceding claim wherein the short codes are two digit codes.

22. A method of selectively establishing telecommunication links between a plurality of dialling stations (MS1) and a plurality of dialled stations (PAD/PH1, T1) in dependence upon short codes produced by the dialling stations, at least one dialled station being selectable by a predetermined short code, the method comprising the steps of:
on establishment of a communication link between a dialled station (PAD/PH1) and the dialling station (MS1), performing subscriber-specific data-conversion operations at the dialled station (PAD/PH1), the operations being dependent on the short code produced by the dialling station (MS1) and on the identity of the dialling station;
**characterised in that** a short code produced by a dialling station is compared with the identity of the dialling station; and a communication link is established if the short code corresponds to a short code permitted to be used for calls made from said dialling station.

23. A method according to claim 22 wherein the comparison is performed at a location remote (SCP2) from the dialling station.

24. A method according to claim 22 or 23 including providing access to a private network (N1), without additional password security, by comparing the identity of the dialling station (MS1) with a stored database (VLR2) of permitted identities, and permitting the call to proceed only if the identity corresponds with one of the permitted identities stored in the database (VLR2).

25. A method according to any of claims 22 to 24 wherein the checking comprises comparing the short code dialled from said dialling station (MS1) with a group of short dialling codes permitted to be used by the dialling station.

26. A method according to any of claims 22 to 25 including selectively routing calls corresponding to the short codes dialled by dialling stations to dialled stations, and disabling routing of a call in the event that an associated short code is not permitted to be used by the dialling station.

27. A method according to any of claims 22 to 26 wherein a predetermined one of said short codes allows access from a first network (N2) to a second network (N1).

28. A method according to claim 27, wherei the dialling station is a mobile station (MS1) of a cellular radio network (N1, N2).

29. A method according to claim 28 wherein the mobile station (MS1) transmits a unique stored identification code to the network to provide said identity.

30. A method according to claim 29 wherein the unique code is stored in a SIM card (SIM).

31. A method according to any of claims 28 to 30, wherein calling data received from a mobile station (MS1) concerning the identity thereof and a short code, is referred to a service control means (SCP2) for determining whether the short code is permitted to be used by the mobile station (MS1), and the call is routed according to the short code if the short code is permitted for use, but otherwise failing the call.

32. A method according to claim 31 wherein a signal is transmitted to the mobile station (MS1) to indicate that a call has failed when the short code in said calling data is determined to be impermissible for use by the mobile station.

33. A method according to claim 31 or 32 wherein a first network (N2) derives data concerning the permissible short codes for a roaming mobile station (MS1) from the network (N1) from which it has roamed, in response to the roaming station (MS1) registering with the first network (N2).

34. A method according to any of claims 27 to 33 wherein a predetermined one of the short codes causes packet assembling and disassembling means (PAD/PH2) to provide access to the second network (N1) from the first network (N1).

35. A method according to any one of claims 27 to 34 wherein the second network (N1) is a private network.

36. Method according to any of claims 22 to 35, wherein the short codes are two digit codes.

## Patentansprüche

1. Kurzcodewählvorrichtung mit:
einer Telekommunikationsnetzwerkeinrichtung (N2) zum selektiven Bereitstellen von Kommunikationsverbindungen zwischen einer Mehrzahl von wählenden Stationen (MS 1) und einer Mehrzahl von angewählten Stationen (T1) in Abhängigkeit von Kurzcodes, die von den wählenden Stationen (MS 1) erzeugt werden, wobei wenigstens eine angewählte Station eine Datenkonvertierungseinrichtung (PAD/PH1) ist, die durch einen vorher festgelegten Kurzcode auswählbar ist und eine Einrichtung zum Ausführen von vertragsnehmerspezifischen Datenkonvertierungsoperationen als Reaktion auf den Kurzcode, der von der wählenden Station erzeugt wird, und/ oder auf die Identität der wählenden Station aufweist; und
**gekennzeichnet durch** eine Überprüfungseinrichtung (VLR2), um die Identität eines Kurzcodes, der von der wählenden Station (MS1) erzeugt wird, mit der Identität der wählenden Station zu vergleichen und, wenn der Kurzcode einem Kurzcode entspricht, dessen Verwendung für Anrufe erlaubt ist, die von der Station aus gemacht werden, den Aufbau der Kommunikationsverbindung zu der gewählten Station (PAD/PH1) zuzulassen.

2. Vorrichtung nach Anspruch 1, bei der die Überprüfungseinrichtung (SCP2) eine Einrichtung zum Bereitstellen einer Gruppe von Kurzwahlcodes, deren Verwendung durch die wählende Station (MS1) erlaubt ist, und eine Einrichtung zum Vergleichen der Kurzcodes, die von der Station gewählt werden, mit den Kurzcodes in der Gruppe umfasst.

3. Vorrichtung nach Anspruch 2, die eine Einrichtung (VLR2) zum Zuordnen von Daten, die der Identität der wählenden Station (MS1) entsprechen, zu der Gruppe und eine Einrichtung (SCP2) zum Vergleichen der Identität der wählenden Station mit den Daten enthält, um die erlaubten Kurzcodes zu bestimmen, die von der wählenden Station benutzt werden können.

4. Vorrichtung nach Anspruch 2 oder 3, die eine Einrichtung enthält, die eine Mehrzahl von Gruppen von Kurzcodes definiert, deren Verwendung für Anrufe von einer Mehrzahl von einzelnen wählenden Stationen aus erlaubt ist.

5. Vorrichtung nach einem der vorangehenden Ansprüche, die eine Einrichtung zur Leitweglenkung eines Anrufes (MSC2) enthält, um Anrufe selektiv entsprechend der Kurzcodes, die von der wählenden Station (NS 1) gewählt werden, an die angewählten Stationen weiterzuleiten, wobei die Überprüfungseinrichtung (MSC2, VLR2) betrieben werden kann, um die Leitweglenkung eines Anrufs bei dem Ereignis zu deaktivieren, dass die Verwendung eines zugeordneten Kurzcodes durch die wählende Station (MS 1) nicht erlaubt ist.

6. Vorrichtung nach einem der vorangehenden Ansprüche, bei der die Netzwerkeinrichtung (7) ein erstes Netzwerk (N2) für die Kommunikation mit der wählenden Station und ein zweites Netzwerk (N 1) enthält, das von dem ersten Netzwerk aus durch einen vorher festgelegten der Kurzcodes zugänglich ist.

7. Vorrichtung nach Anspruch 6, bei dem das erste Netzwerk (N2) eine Funkverbindung (1) für die Verwendung zu einer mobilen Station (MS 1) als der wählenden Station enthält.

8. Vorrichtung nach Anspruch 7, die eine mobile Station (MS1) zur Verwendung als die wählende Station enthält.

9. Vorrichtung nach Anspruch 8, bei der das erste Netzwerk (N2) ein zellulares Funknetzwerk ist und die mobile Station (MS1) einen Speicher mit einem eindeutigen gespeicherten Identifikationscode enthält, um die Identität bereitzustellen.

10. Vorrichtung nach Anspruch 9, bei der der eindeutige Code in einer SIM-Karte (SIM) gespeichert ist.

11. Vorrichtung nach einem der Ansprüche 7 bis 10, bei der das erste Netzwerk (N2) eine Dienststeuereinrichtung (SCP2) enthält, die Daten, die die Identität von mobilen Stationen zur Verwendung in dem Netzwerk (N2) betreffen, und entsprechende Gruppen von Kurzcodes speichert, deren Verwendung von den jeweiligen mobilen Stationen aus erlaubt ist.

12. Vorrichtung nach Anspruch 11, die eine Nachrichtenvermittlungseinrichtung (MSC2) enthält, die als Reaktion auf Anrufdaten betrieben werden kann, die von einer mobilen Station (MS1) empfangen werden und die deren Identität und einen Kurzcode betreffen, um die Anrufdaten an die Dienststeuereinrichtung (SCP2) weiterzuleiten, um zu bestimmen, ob die Verwendung des Kurzcodes durch die mobile Station erlaubt ist, und den Anruf entsprechend dem Kurzcode weiterzuleiten, wenn die Verwendung des Kurzcodes erlaubt ist, aber sonst den Anruf fehlschlagen zu lassen.

13. Vorrichtung nach Anspruch 12, die eine Einrichtung (MSC2) enthält, um der mobilen Station zu signalisieren, dass ein Anruf fehlgeschlagen ist, wenn für den Kurzcode in den Anrufdaten bestimmt wird, dass die Verwendung durch die mobile Station nicht erlaubt werden kann.

14. Vorrichtung nach Anspruch 11, 12 oder 13, bei der das erste Netzwerk (N2) eine Heimatregistereinrichtung (HLR2) zum Halten von Daten enthält, die die Identität der mobilen Stationen, die für die Verwendung in dem Netzwerk registriert sind, und die Kurzcodes betreffen, deren Verwendung durch die mobilen Stationen jeweils erlaubt ist.

15. Vorrichtung nach Anspruch 14, bei der die Heimatregistereinrichtung (HLR2) ein Register der Nummern von gewählten Stationen enthält, die den erlaubten Kurzcodes zugeordnet werden sollen.

16. Vorrichtung nach Anspruch 14 oder 15, die eine Besucherregistereinrichtung (VLR2) enthält, um Daten zu halten, die eine mobile Station betreffen, die von einem anderen Netzwerk (N1) herüberwandert und für die Verwendung in dem ersten Netzwerk (N2) registriert ist; wobei die Besucherregistereinrichtung (VLR2) Daten enthält, die die Kurzcodes betreffen, deren Verwendung durch die wandernde mobile Station (MS1) erlaubt ist.

17. Vorrichtung nach Anspruch 16, bei der das erste Netzwerk (N2) betrieben werden kann, um Daten, die die Kurzcodes für die wandernde mobilen Station (MS1) betreffen, aus dem Netzwerk (N1), aus dem es herübergewandert ist, als Reaktion auf die wandernde Station, die sich in dem ersten Netzwerk (N2) registriert, herzuleiten.

18. Vorrichtung nach einem der Ansprüche 6 bis 17, bei der das zweite Netzwerk ein paketvermitteltes Netzwerk (PSTN) umfasst.

19. Vorrichtung nach Anspruch 18, die eine Einrichtung zum Paketieren und Depaketieren (PAD/PH2) enthält, die auf einen vorher festgelegten der Kurzcodes anspricht, um Zugang von dem ersten Netzwerk (N2) zu dem zweiten Netzwerk (N1, PSTN1) bereitzustellen.

20. Vorrichtung nach einem der Ansprüche 6 bis 19, bei der das zweite Netzwerk (N2) ein privates Netzwerk ist.

21. Vorrichtung nach einem der vorangehenden Ansprüche, bei dem die Kurzcodes zweistellige Codes sind.

22. Verfahren zum selektiven Aufbauen von Telekommunikationsverbindungen zwischen einer Mehrzahl von wählenden Stationen (MS1) und einer Mehrzahl von angewählten Stationen (PAD/PH1, T1) in Abhängigkeit von Kurzcodes, die von den wählenden Stationen erzeugt werden, wobei wenigstens eine gewählte Station durch einen vorher festgelegten Kurzcodes auswählbar ist, wobei das Verfahren die folgenden Schritte umfasst:
nach dem Aufbau einer Telekommunikationsverbindung zwischen einer angewählten Station (PAD/PH1) und der wählenden Station (MS 1) Ausführen von vertragsnehmerspezifischen Datenkonvertierungsoperationen an der angewählten Station (PAD/PH1), wobei die Operationen von dem Kurzcode, der von der wählenden Station (MS1) erzeugt wurde, und von der Identität der anrufenden Station abhängen;
**dadurch gekennzeichnet, dass** ein Kurzcode, der von einer wählenden Station erzeugt wurde, mit der Identität der wählenden Station verglichen wird; und eine Kommunikationsverbindung aufgebaut wird, wenn der Kurzcode einem Kurzcode entspricht, dessen Verwendung für Anrufe erlaubt ist, die von der wählenden Station aus gemacht werden.

23. Verfahren nach Anspruch 22, bei dem der Vergleich an einem von der wählenden Station entfernten Ort (SCP2) durchgeführt wird.

24. Verfahren nach Anspruch 22 oder 23, das die Bereitstellung von Zugang zu einem privaten Netzwerk (N1) ohne zusätzliche Passwortsicherheit einschließt, indem die Identität der wählenden Station (MS1) mit einer gespeicherten Datenbank (VLR2) von erlaubten Identitäten verglichen wird, und die Weiterführung des Anrufs nur erlaubt wird, wenn die Identität einer der erlaubten Identitäten entspricht, die in der Datenbank (VLR2) gespeichert sind.

25. Verfahren nach einem der Ansprüche 22 bis 24, bei dem die Überprüfung das Vergleichen des Kurzcodes, der von der gewählten Station (MS1) aus gewählt wird, mit einer Gruppe von Kurzwahlcodes umfasst, deren Verwendung durch die wählende Station erlaubt ist.

26. Verfahren nach einem der Ansprüche 22 bis 25, das die selektive Leitweglenkung von Anrufen entsprechend der Kurzcodes, die von den wählenden Stationen gewählt werden, zu den angewählten Stationen und das Deaktivieren der Leitweglenkung eines Anrufs bei dem Ereignis enthält, dass ein zugeordneter Kurzcode für die Verwendung durch die wählende Stationen nicht erlaubt ist.

27. Verfahren nach einem der Ansprüche 22 bis 26, bei dem ein vorher festgelegter der Kurzcodes den Zugang von einem ersten Netzwerk (N2) aus zu einem zweiten Netzwerk (N1) erlaubt.

28. Verfahren nach Anspruch 27, bei dem die wählende Station eine mobile Station (MS1) eines zellularen Funknetzwerks (N1, N2) ist.

29. Verfahren nach Anspruch 28, bei dem die mobile Station (MS 1) einen eindeutigen gespeicherten Identifikationscode an das Netzwerk sendet, um die Identität bereitzustellen

30. Verfahren nach Anspruch 29, bei dem der eindeutige Code in einer SIM-Karte (SIM) gespeichert ist.

31. Verfahren nach einem der Ansprüche 28 bis 30, bei dem Anrufdaten, die von einer mobilen Station (MS1) empfangen werden und die deren Identität und einen Kurzcode betreffen, zu einer Dienststeuereinrichtung (SCP2) weitergeleitet werden, um festzustellen, ob der Kurzcode für die Verwendung durch die mobile Station (MS1) erlaubt ist, und der Anruf wird entsprechend dem Kurzcode weitergeleitet, wenn der Kurzcode für die Verwendung erlaubt ist, aber sonst wird der Anruf fehlschlagen gelassen.

32. Verfahren nach Anspruch 31, bei dem ein Signal an die mobile Station (MS 1) gesendet wird, um anzuzeigen, dass ein Anruf fehlgeschlagen ist, wenn für den Kurzcode in den Anrufdaten festgestellt wird, dass die Verwendung durch die mobile Station nicht erlaubt werden kann.

33. Verfahren nach Anspruch 31 oder 32, bei dem ein erstes Netzwerk (N2) Daten, die die erlaubten Kurzcodes für eine wandernde mobile Station (MS1) betreffen, aus dem Netzwerk (N1), von dem es herübergewandert ist, als Reaktion auf die wandernde Station (MS1) herleitet, die sich in dem ersten Netzwerk (N2) registriert.

34. Verfahren nach einem der Ansprüche 27 bis 33, bei dem ein vorher festgelegter von den Kurzcodes eine Einrichtung zum Paketieren und Depaketieren (PAD/PH2) veranlasst, den Zugang zu dem zweiten Netzwerk (N1) von dem ersten Netzwerk (N2) aus bereitzustellen.

35. Verfahren nach einem der Ansprüche 27 bis 34, bei dem das zweite Netzwerk (N1) ein privates Netzwerk ist.

36. Verfahren nach einem der Ansprüche 22 bis 35, bei dem die Kurzcodes zweistellige Codes sind.

## Revendications

1. Equipement de numérotation à code court comprenant :
un moyen de réseau de télécommunications (N2) destiné à fournir sélectivement des liaisons de communications entre une pluralité de postes appelants (MS1) et une pluralité de postes appelés (T1) suivant des codes courts produits par les postes appelants (MS1), au moins un poste appelé étant un Equipement de conversion de données (PAD/PH1) pouvant être sélectionné par un code court prédéterminé et comportant un moyen pour exécuter des opérations de conversion de données spécifiques à un abonné en réponse au code court produit par le poste appelant et/ou l'identité du poste appelant, et
**caractérisé par** un moyen de contrôle (VLR2) destiné à comparer l'identité d'un code court produit par un poste appelant ((MS1) à l'identité du poste appelant et, si le code court correspond à un code court dont l'utilisation est autorisée pour des appels effectués à partir dudit poste, permettant que la liaison de communication soit établie vers le poste appelé (PAD/PH1).

2. Equipement selon la revendication 1, dans lequel le moyen de contrôle (SCP2) comprend un moyen destiné à fournir un groupe de codes de numérotation courts dont l'utilisation par le poste appelant (MS1) est autorisée, et un moyen destiné à comparer les codes courts numérotés à partir dudit poste aux codes courts du groupe.

3. Equipement selon la revendication 2, comprenant un moyen (VLR2) destiné à associer des données correspondant à l'identité du poste appelant (MS1) au groupe, et un moyen (SCP2) destiné à comparer l'identité du poste appelant auxdites données, afin de déterminer les codes courts autorisables qui peuvent être utilisés par le poste appelant.

4. Equipement selon la revendication 2 ou 3, comprenant un moyen définissant une pluralité de groupes de codes courts dont l'utilisation est autorisée pour des appels effectués à partir d'une pluralité de postes appelants individuels.

5. Equipement selon l'une quelconque des revendications précédentes, comprenant un moyen d'acheminement d'appel (MSC2) destiné à acheminer sélectivement des appels correspondant aux codes courts composés par le poste appelant (MSC1) vers les postes appelés, le moyen de contrôle (MSC2, VLR2) étant mis en oeuvre pour désactiver l'acheminement d'un appel dans le cas où un code court associé n'est pas autorisé à être utilisé par le poste appelant (MSC1).

6. Equipement selon l'une quelconque des revendications précédentes, dans lequel le moyen de réseau (7) comprend un premier réseau (N2) destiné à communiquer avec le poste appelant, et un second réseau (N1) accessible depuis le premier réseau par un code prédéterminé parmi lesdits codes courts.

7. Equipement selon la revendication 6, dans lequel le premier réseau (N2) comprend une liaison radio (1) à utiliser avec un poste mobile (MS1) comme poste appelant.

8. Equipement selon la revendication 7, comprenant le poste mobile (MS1) à utiliser en tant que poste appelant.

9. Equipement selon la revendication 8, dans lequel le premier réseau (N2) est un réseau radio cellulaire et le poste mobile (MS1) comprend une mémoire ayant un code d'identification mémorisé unique pour fournir ladite identité.

10. Equipement selon la revendication 9, dans lequel le code unique est mémorisé dans une carte de type SIM (SIM).

11. Equipement selon l'une quelconque des revendications 7 à 10, dans lequel le premier réseau (N2) comprend un moyen de commande de service (SCP2) qui mémorise utiliser avec le réseau (N2) et des groupes correspondants de codes courts dont l'utilisation est autorisée à partir des postes mobiles respectifs.

12. Equipement selon la revendication 11, comprenant un moyen de commutation de messages (MSC2) fonctionnant, en réponse à des données d'appel reçu d'un poste mobile (MSC1) concernant l'identité de celui-ci et un code court, pour se référer aux données de l'appelant dans le moyen de commande de service (SCP2) afin de déterminer si le code court est autorisé à être utilisé par le poste mobile, et acheminer l'appel conformément au code court si le code court a son utilisation autorisée, mais sinon interrompre l'appel.

13. Equipement selon la revendication 12, comprenant un moyen (MSC2) destiné à signaler au poste mobile qu'un appel a échoué lorsque le code court desdites données de l'appelant est déterminé comme ne pouvant pas être autorisé pour une utilisation par le poste mobile.

14. Equipement selon la revendication 11, 12 ou 13, dans lequel le premier réseau (N2) comprend un moyen de registre de rattachement (HLR2) destiné à conserver des données concernant l'identité des postes mobiles enregistrés en vue d'une utilisation avec le réseau et les codes courts dont l'utilisation est autorisée par les postes mobiles, respectivement.

15. Equipement selon la revendication 14, dans lequel le moyen de registre de rattachement (HLR2) comprend un registre des numéros des postes appelés à associer aux codes courts autorisés.

16. Equipement selon la revendication 14 ou 15, comprenant un moyen de registre de visiteur (VLR2) destiné à conserver des données concernant un poste mobile, qui est itinérant venant d'un autre réseau (N1), et est enregistré en vue d'une utilisation avec le premier réseau (N2), le moyen de registre de visiteur (VLR2) comprenant des données concernant les codes courts dont l'utilisation est autorisée par le poste mobile itinérant (MS1).

17. Equipement selon la revendication 16, dans lequel le premier réseau (N2) fonctionne pour obtenir des données concernant les codes courts autorisables pour le poste mobile itinérant (MS1) à partir du réseau (N1) d'où il provient, en réponse à l'enregistrement du poste itinérant avec le premier réseau (N2).

18. Equipement selon l'une quelconque des revendications 6 à 17, dans lequel le second réseau comprend un réseau commuté par paquets (RTCP).

19. Equipement selon la revendication 18, comprenant un moyen de composition et de décomposition de paquet (PAD/PH2) répondant à un code prédéterminé des codes courts pour fournir un accès au second réseau (N1, RTCP1) depuis le premier réseau (N2).

20. Equipement selon l'une quelconque des revendications 6 à 19, dans lequel le second réseau (N2) est un réseau privé.

21. Equipement selon l'une quelconque des revendications précédentes, dans lequel les codes courts sont des codes à deux chiffres.

22. Procédé consistant à établir sélectivement des liaisons de télécommunications entre une pluralité de postes appelants (MS1) et une pluralité de postes appelés (PAD/PH1, T1), suivant des codes courts produits par des postes appelants, au moins un poste appelé pouvant être sélectionné par un code court prédéterminé, le procédé comprenant les étapes consistant à :
lors de l'établissement d'une liaison de communications entre un poste appelé (PAD/PH1) et le poste appelant (MS1), exécuter des opérations de conversion de données spécifiques à l'abonné au niveau du poste appelé (PAD/PH1), les opérations dépendant du code court produit par le poste appelant (MS1) et de l'identité du poste appelant,
**caractérisé en ce qu'**un code court produit par un poste appelant est comparé à l'identité du poste appelant et une liaison de communications est établie si le code court correspond à un code court dont l'utilisation est autorisée pour des appels effectués à partir dudit poste appelant.

23. Procédé selon la revendication 22, dans lequel la comparaison est exécutée à un emplacement à distance (SCP2) du poste appelant.

24. Procédé selon la revendication 22 ou 23 comprenant la fourniture d'un accès à un réseau privé (N1), sans sécurité supplémentaire par mot de passe, en comparant l'identité du poste appelant (MS1) à une base de données mémorisée (VLR2) des identités autorisées, et on autorise l'appel à se poursuivre uniquement si l'identité correspond à une identité parmi les identités autorisées mémorisées dans la base de données (VLR2).

25. Procédé selon l'une quelconque des revendications 22 à 24, dans lequel le contrôle comprend la comparaison du code court numéroté depuis ledit poste appelant (MS1) à un groupe de codes courts de numérotation dont l'utilisation est autorisée par le poste appelant.

26. Procédé selon l'une quelconque des revendications 22 à 25, comprenant l'acheminement sélectif des appels correspondant aux codes courts numérotés par des postes appelants vers des postes appelés, et la désactivation de l'acheminement d'un appel dans le cas où un code court associé n'est pas autorisé à être utilisé par le poste appelant.

27. Procédé selon l'une quelconque des revendications 22 à 26, dans lequel un code prédéterminé parmi lesdits codes courts permet un accès depuis un premier réseau (N2) à un second réseau (N1).

28. Procédé selon la revendication 27, dans lequel le poste appelant est un poste mobile (MS1) d'un réseau radio cellulaire (N1, N2).

29. Procédé selon la revendication 28, dans lequel le poste mobile (MS1) transmet un code d'identification mémorisé unique au réseau pour procurer ladite identité.

30. Procédé selon la revendication 29, dans lequel le code unique est mémorisé dans une carte de type SIM (SIM).

31. Procédé selon l'une quelconque des revendications 28 à 30, dans lequel les données d'appel reçues d'un poste mobile (MS1) concernant l'identité de celui-ci et un code court servent de référence pour un moyen de commande de service (SCP2) qui détermine si le code court est autorisé à être utilisé par le poste mobile (MS1), et achemine l'appel conformément au code court si le code court est autorisé à être utilisé, mais sinon interrompt l'appel.

32. Procédé selon la revendication 31, dans lequel un signal est transmis au poste mobile (MS1) pour indiquer qu'un appel a échoué lorsque le code court dans lesdites données de l'appelant est déterminé comme ne pouvant pas être autorisé pour une utilisation par le poste mobile.

33. Procédé selon la revendication 31 ou 32, dans lequel un premier réseau (N2) obtient des données concernant les codes autorisables pour un poste mobile itinérant (MS1) à partir du réseau (N1) dont il provient, en réponse au poste itinérant (MS1) qui s'enregistre avec le premier réseau (N2).

34. Procédé selon l'une quelconque des revendications 27 à 33, dans lequel un code prédéterminé parmi les codes courts amène un moyen de composition et de décomposition de paquet (PAD/PH2) à procurer un accès au second réseau (N1) depuis le premier réseau (N2)

35. Procédé selon l'une quelconque des revendications 27 à 34, dans lequel le second réseau (N1) est un réseau privé.

36. Procédé selon l'une quelconque des revendications 22 à 35, dans lequel les codes courts sont des codes à deux chiffres.
